# EUROPÄISCHE PATENTSCHRIFT

(11) **EP 2 644 930 B1**
(45) Veröffentlichungstag und Bekanntmachung des Hinweises auf die Patenterteilung: **14.08.2019**
(21) Anmeldenummer: 13000534.1
(22) Anmeldetag: 01.02.2013
(51) Int. Cl.: F16F 1/38

(54) **LAGER UND VERFAHREN ZU DESSEN HERSTELLUNG**
BEARING AND METHOD FOR ITS MANUFACTURE
PALIER ET SON PROCÉDÉ DE FABRICATION

(30) Priorität: 29.03.2012 DE 102012006284
(43) Veröffentlichungstag der Anmeldung: 02.10.2013
(73) Patentinhaber: Vibracoustic GmbH, 64293 Darmstadt (DE)
(72) Erfinder: Werner, Phillipp, 21339 Lüneburg (DE); Runge, Hannes, 22297 Hamburg (DE); Breiden, Oliver, 21075 Hamburg (DE); Schröder, Bastian, 22041 Hamburg (DE)
(74) Vertreter: Flügel Preissner Schober Seidel

(56) Entgegenhaltungen:
- WO-A1-2007/042934
- GB-A- 891 622
- JP-A- 2009 180 330
- JP-U- S56 149 144

## Beschreibung

### Technisches Gebiet

Die Erfindung betrifft ein Lager, umfassend einen Kern, der mit radialem Abstand von einem Gehäuse außenumfangsseitig umschlossen ist, wobei in dem durch den radialen Abstand gebildeten radialen Spalt ein Federkörper aus einem gummielastischen Werkstoff angeordnet ist, wobei der Kern eine Stange und zwei gegensinnig zueinander angeordnete Kegel umfasst und wobei die Kegel die Stange reibschlüssig anliegend, zur Aufbringung einer Druckvorspannung auf den Federkörper jedoch in axialer Richtung verschiebbar umschließen.

### Stand der Technik

Derartige Lager sind allgemein bekannt und beispielsweise als Hydrobuchse oder Hilfsrahmenlager für ein Kraftfahrzeug ausgebildet.
Häufig werden solche Lager durch Vulkanisation hergestellt, wobei das Abkühlen des Federkörpers nach der Vulkanisation im Federkörper zu Spannungen durch Schwindung führt. Die Spannungen durch Schwindung bewirken häufig Lebensdauereinbußen des Lagers, insbesondere kann es zu einer frühzeitigen Beschädigung/Zerstörung des Federkörpers kommen.

Um im Federkörper diese die Gebrauchsdauer verringernden Spannungen durch Schwindung zu verhindern, können die vorbekannten Lager im Anschluss an die Vulkanisation kalibriert werden. Ganz generell wird bei der Kalibrierung des Lagers dafür gesorgt, dass im Federkörper zumindest die die Gebrauchsdauer verringernden Spannungen durch Schwindung aufgehoben, besser noch eine Druck-Vorspannung in den Federkörper eingebracht wird. Durch die Druck-Vorspannung im Federkörper ist dieser auch während der bestimmungsgemäßen Verwendung des Lagers keinen unerwünscht hohen Zug- oder Schubspannungen ausgesetzt, so dass das Lager insgesamt gleichbleibend gute Gebrauchseigenschaften während einer langen Gebrauchsdauer aufweist.
Die Kalibrierung der vorbekannten Lager kann prinzipiell auf unterschiedliche Art und Weise erfolgen, beispielsweise dadurch, dass der Kern gegenüber dem Gehäuse in radialer Richtung aufgeweitet wird und/oder dass das Gehäuse relativ zum Kern in seinem Durchmesser verkleinert wird. Bei der letztgenannten Art der Kalibrierung kann das Gehäuse in Längsrichtung geschlitzt ausgebildet sein. Beim Einpressen des Lagers, zum Beispiel in einen Hilfsrahmen eines Kraftfahrzeugs, schließt sich der Schlitz im Gehäuse, das Gehäuse wird dadurch in seinem Durchmesser verkleinert und eine Druckvorspannung im elastomeren Federkörper aufgebaut.
Für Hydrolager ist die Verwendung eines in Längsrichtung geschlitzten Gehäuses wenig zufriedenstellend, weil ein solcher Längsschlitz gegenüber der Umgebung nur schlecht abgedichtet werden kann.

JP 2009 180330 A offenbart ein Lager, umfassend einen Kern, der mit radialem Abstand von einem Gehäuse aussenumfangsseitig umschlossen ist, wobei in dem durch den radialen Abstand gebildeten Spalt ein Federkörper aus einem gummielastischen Werkstoff angeordnet ist. Der Kern umfasst eine Stange und zwei gegensinnig auf der Stange zueinander angeordnete Kegel.

GB 891 662 A offenbart eine Buchse, die ein Außenrohr und ein Innenrohr, bestehend aus zwei axial zueinander angeordneten Kegeln, aufweist, die durch einen elastischen Gummikörper miteinander verbunden sind. Zur Herstellung des Gummikörpers wird ein Ring zwischen den Kegeln angeordnet, um einen Spalt zwischen den Kegeln auszubilden. Der Ring wird nach der Ausbildung des Gummikörpers wieder entfernt. Zweck des Spaltes ist es, eine Vorspannung in den Gummikörper einzubringen, wenn die beiden Kegel mittels eines Bolzens und einer Mutter aufeinander zubewegt werden.

### Darstellung der Erfindung

Der Erfindung liegt die Aufgabe zugrunde, ein Lager der vorbekannten Art derart weiterzuentwickeln, dass es einfach und kostengünstig herstellbar ist und gleichbleibend gute Gebrauchseigenschaften während einer langen Gebrauchsdauer aufweist.

Diese Aufgabe wird erfindungsgemäß mit den Merkmalen von Anspruch 1 gelöst. Auf vorteilhafte Ausgestaltungen des Lagers nehmen die auf Anspruch 1 direkt oder indirekt rückbezogenen Ansprüche Bezug.

Zur Lösung der Aufgabe ist es vorgesehen, dass die Kegel aus einem polymeren Werkstoff bestehen und an die Stange angespritzt sind.

Hierbei ist von Vorteil, dass der Federkörper durch ein einfaches axiales aufeinanderzu Schieben der Kegel derart gestaucht wird, dass er anschließend mit einer Druckvorspannung zwischen dem Kern und dem Gehäuse angeordnet ist. Einer technisch wesentlich aufwendigeren Aufweitung des Kerns in radialer Richtung nach außen oder der Verwendung eines geschlitzten Gehäuses zur Aufbringung einer Druckvorspannung im Federkörper bedarf es daher nicht. Der Reibschluss zwischen der Stange und den Kegeln ist erforderlich, um die in axialer Richtung aufeinander zu bewegten Kegel in ihrer axialen Position auf der Stange auch dann sicher zu halten, wenn eine Druckvorspannung in den Federkörper eingebracht ist.

Die Kegel können einander zugewandte Stirnseiten aufweisen, die einander mit axialem Abstand benachbart zugeordnet sind und einen kleineren äußeren Durchmesser aufweisen, als die einander axial abgewandten Stirnseiten. Werden die beiden Kegel während der Herstellung des Lagers in axialer Richtung aufeinander zu bewegt, verkleinert sich das Volumen des Ringraums zwischen dem Kern und dem Gehäuse, in dem der Federkörper angeordnet ist. Der Federkörper wird dadurch insgesamt gestaucht. Vulkanisationsbedingte Zugspannungen innerhalb des Federkörpers nach seiner Herstellung werden ausgeglichen und in eine Druckvorspannung umgewandelt.

Die Kegel bestehen aus einem polymeren Werkstoff. Die Herstellung des Lagers ist dadurch, wie später noch erläutert wird, wesentlich vereinfacht. Die Kegel sind direkt an die Stange angespritzt. Durch das Umspritzen der Stange mit Kunststoff mittels Kunststoffspritzguss lassen sich schrumpfbedingt Losbrechmomente der Kegel auf der Stange realisieren, die es einerseits problemlos ermöglichen, die Kegel auf der Stange zu verschieben, um eine Druckvorspannung in den Federkörper einzubringen und andererseits die Kegel sicher in ihrer axialen Position auf der Stange zu halten, wenn die Druckvorspannung in den Federkörper eingebracht ist und das Lager bestimmungsgemäß verwendet wird.

Die Kegel können durch ein Losbrechmoment auf der Stange verschiebbar angeordnet sein, das zumindest 5 kN beträgt. Ein solches Losbrechmoment sorgt zum einen für eine ausreichend leichte Verschiebbarkeit der Kegel auf der Stange axial aufeinander zu, um die Druckvorspannung in den Federkörper einzubringen und andererseits für eine ausreichend große Haltekraft der Kegel auf der Stange, wenn die Vorspannung in den Federkörper eingebracht ist. Die Größe des Losbrechmoments kann zum Beispiel dadurch variiert werden, dass die Größe der Reibung zwischen den Kegeln und der Stange an den jeweiligen Anwendungsfall angepasst ist. Das kann durch eine angepasste Rauigkeit der einander berührenden Oberflächen erfolgen.

Der axial zwischen den Kegeln durch den axialen Abstand gebildete axiale Spalt kann während der bestimmungsgemäßen Verwendung des Lagers bevorzugt eine axiale Breite aufweisen, die > 0 ist. Prinzipiell auch möglich wäre eine axiale Breite des Spalts, die 0 beträgt, wenn sich also die einander zugewandten Stirnseiten der Kegel anliegend berühren würden. Bei einer solchen Ausgestaltung ist allerdings von Nachteil, dass ungünstige herstellungsbedingte Toleranzen dafür sorgen könnten, dass die Druckvorspannung im Federkörper nicht ausreichend groß ist. Außerdem bewirkt eine axiale Breite des Spaltes von 0 eine Faltenbildung im Elastomer in dessen direkter Umgebung. Solch eine Faltenbildung kann die Lebensdauer des Lagers beeinträchtigen und ist möglichst zu vermeiden.
Um herstellungsbedingte Toleranzen besser ausgleichen zu können und sicherzustellen, dass in jedem Fall eine vorherbestimmte Druckvorspannung in den Federkörper eingebracht werden kann und um die zuvor beschriebene, nachteilige Faltenbildung zu verhindern, ist es deshalb von Vorteil, wenn die axiale Breite des axialen Spalts > 0 ist. Dadurch besteht bei ungünstigem Zusammenwirken der Toleranzen die Möglichkeit, die Kegel in axialer Richtung noch ein bisschen weiter aufeinander zu zubewegen, um dadurch die erforderliche Druckvorspannung in den Federkörper einbringen zu können.

Der axiale Spalt ist vom Federkörper ungehaftet umschlossen. Eine solche ungehaftete Zuordnung des Federkörpers zur Stange im Bereich des axialen Spalts zwischen den einander zugewandten Stirnseiten der Kegel ist erforderlich, um die Kegel axial aufeinander zubewegen zu können, ohne den Federkörper im Bereich des axialen Spalts zu beschädigen/zu zerstören. Abweichend davon besteht die Möglichkeit, dass der Federkörper im Bereich des Spalts nur sehr schwach an der Stange anhaftet, wobei diese schwache Anhaftung bei Bewegung der beiden Kegel axial aufeinander zu aufgebrochen wird. Aus fertigungstechnischer Sicht ist das jedoch weniger vorteilhaft.
In jedem Fall muss eine axiale Verschiebung der Kegel aufeinander zu möglich sein, um eine Druckvorspannung in den Federkörper einbringen zu können,

Die den Kegeln zugewandte Oberfläche der Stange kann in Längsrichtung eine Rauigkeit R_{Z} aufweisen, die 1 bis 80 beträgt. Durch die Rauigkeit kann Einfluss auf die axiale Verschiebbarkeit der beiden Kegel zum Einbringen der Druckvorspannung in den Federkörper und auf die Haltekraft der Kegel auf der Stange bei bereits in den Federkörper eingebrachter Druckvorspannung genommen werden. Generell sollte die Rauigkeit möglichst groß gewählt werden, um ein großes Losbrechmoment der Kegel bei deren axialer Verschiebbarkeit auf der Stange zu erreichen.

Die Stange kann aus einem metallischen Werkstoff bestehen. Hierbei ist von Vorteil, dass eine solche Stange für eine ausreichende Festigkeit des Kerns sorgt, da der Kern in der Regel mittels Verschraubung mit weiteren Maschinenelementen verbunden wird. Die Stange kann beispielsweise aus einem Aluminiumstrangpressprofil bestehen.

Die Stange kann hohlzylinderförmig ausgebildet sein und weitere durchgängige Taschen aufweisen . Dadurch lassen sich Gewichtsvorteile erreichen. Ein vorteilhaft niedriges Gewicht wird auch dadurch begünstigt, wenn der Kern des erfindungsgemäßen Lagers bevorzugt als Hybrid aus Metall und Kunststoff ausgebildet ist. Die metallische Stange ist von den Kegeln aus Kunststoff umschlossen. Die Stange aus Metall sorgt, wie zuvor bereits ausgeführt, für eine ausreichende Festigkeit des Kerns, während durch die große Gestaltungsfreiheit bei Kunststoffteilen die Kegel in ihrer Form ausgezeichnet an die jeweiligen Gegebenheiten des Anwendungsfalles angepasst werden können.

Der Kern und das Gehäuse können, im Längsschnitt des Lagers betrachtet, einander zugewandte Oberflächen aufweisen, die im Wesentlichen kongruent gestaltet sind. Dadurch ist von Vorteil, dass der Einbauraum für den Federkörper im Wesentlichen eine übereinstimmende radiale Weite entlang der gesamten axialen Breite des Lagers aufweist. Die Druckvorspannungen im gesamten Federkörper sind währenden der bestimmungsgemäßen Verwendung des Lagers im Wesentlichen übereinstimmend. Eine unerwünscht ungleichmäßige mechanische Belastung des Federkörpers, die zu einer reduzierten Gebrauchsdauer führen könnte, wird dadurch vermieden.

Kongruent gestaltete, einander zugewandte Oberflächen von Kern und Gehäuse können beispielsweise dadurch erreicht werden, dass die Außenumfangsfläche des Kerns konkav und die Innenumfangsfläche des Gehäuses konvex ausgebildet ist. Die konkave Ausbildung des Kerns wird durch die beiden gegensinnig zueinander angeordneten Kegel erreicht.

Das Lager kann als Hydrobuchse oder Hilfsrahmenlager für ein Kraftfahrzeug ausgebildet sein. Ist das Lager als Hydrobuchse ausgebildet, bedarf es durch die erfindungsgemäße Ausgestaltung keiner separaten Abdichtung der mit Fluid gefüllten Räume, weil das Gehäuse in Umfangsrichtung in sich geschlossen ausgebildet ist, ebenso wie die Kegel. Der axiale Spalt zwischen den Kegeln und gegenüber der Stange wird durch den Federkörper aus gummielastischem Werkstoff abgedichtet und bedarf keines zusätzlichen Dichtelementes zur Abdichtung gegen Leckage zwischen Kegel und Stange. Ein erfindungsgemäß axial kalibriertes hydraulisches Lager weist einen einfachen Aufbau auf und ist kostengünstig herstellbar.
Für ein Hilfsrahmenlager eines Kraftfahrzeugs ist die Verwendung eines Lagers mit auf Druck vorgespanntem Federkörper wegen der hohen mechanischen dynamischen Belastung bei einer solchen Verwendung von Vorteil. Das Entstehen von nachteiligen Zugspannungen im Federkörper ist dadurch praktisch ausgeschlossen.

Außerdem betrifft die Erfindung ein Verfahren zur Herstellung eines solchen Lagers.

Der Erfindung liegt die Aufgabe zugrunde, ein Verfahren zu zeigen, durch das das zuvor beschriebene Lager einfach und kostengünstig herstellbar ist, auch dann, wenn das Lager als Hydrolager ausgebildet ist.

Gelöst wird diese Aufgabe durch ein Verfahren gemäß Anspruch 12. Auf vorteilhafte Weiterbildungen des Verfahrens nehmen die auf Anspruch 12 direkt oder indirekt rückbezogenen Ansprüche Bezug.

Zur Lösung der Aufgabe ist ein Verfahren zur Herstellung eines Lagers, wie zuvor beschrieben, vorgesehen, bei dem in einem ersten Verfahrensschritt die Stange und die Kegel miteinander zum Kern vormontiert werden, derart, dass die einander zugewandten Stirnseiten der Kegel zur Einbringung einer Druckvorspannung in den Federkörper im sechsten Verfahrensschritt durch den axialen Spalt mit axialem Abstand benachbart zueinander angeordnet sind, dass in einem zweiten Verfahrensschritt nur die außenumfangsseitigen Oberflächen der Kegel, nicht die außenumfangsseitige Oberfläche der Stange im Bereich des axialen Spalts, mit einem Haftmittel versehen werden, dass in einem dritten Verfahrensschritt der vormontierte Kern und das Gehäuse in die Kavität eines Vulkanisationswerkzeugs eingelegt werden, dass in einem vierten Verfahrensschritt der gummielastische Werkstoff des Federkörpers in die Kavität eingebracht und vulkanisiert wird, dass in einem fünften Verfahrensschritt das Lager aus dem Vulkanisationswerkzeug entformt wird, dass in einem sechsten Verfahrensschritt die Kegel durch Überwindung des Losbrechmoments und Reduzierung der axialen Breite des axialen Spalts zur Einbringung der Druckvorspannung in den Federkörper axial aufeinander zu bewegt werden.
Die Vulkanisation des bereits gefügten Verbunds aus Stange und Kegeln, wobei der axiale Spalt frei von Haftmittel ist, ist ein besonders kostengünstiges und prozesssicheres Verfahren.

Der polymere Werkstoff der Kegel kann im ersten Verfahrensschritt direkt an die Stange angespritzt werden. Die Herstellung der Kegel und deren Verbindung mit der Stange sind dadurch besonders einfach. Die Kegel unterliegen ebenfalls, wie auch der Federkörper, herstellungsbedingtem Schrumpf, so dass sich die axiale Hin- und Herverschiebbarkeit der Kegel auf der Stange praktisch zwangsläufig und automatisch ergibt. Die Einstellung des Losbrechmoments, das für eine Bewegung der Kegel auf der Stange überwunden werden muss, kann zum Beispiel dadurch beeinflusst werden, dass die Stange vor ihrer Umspritzung mit dem polymeren Werkstoff für den Kegel gestrahlt wird, um die Oberflächenrauigkeit und damit das Losbrechmoment zu erhöhen.

Während des ersten Verfahrensschritts kann zusammen mit den Kegeln eine Abdeckung für den axialen Spalt mit angespritzt werden. Diese Abdeckung sorgt dafür, dass während des zweiten Verfahrensschritts die Oberfläche der Stange im Bereich des axialen Spalts zuverlässig frei von Haftmittel bleibt. Dadurch wird erreicht, dass der Federkörper der Stange in diesem Bereich ungehaftet zugeordnet ist.

Nach dem zweiten und vor dem dritten Verfahrensschritt kann die Abdeckung vom Kern entfernt werden. Nachdem die Abdeckung dafür gesorgt hat, dass kein Haftmittel in den axialen Spalt gelangt, wird die Abdeckung vom Kern abgetrennt, um im Anschluss an die Vulkanisation und an die Entformung des Lagers aus dem Vulkanisationswerkzeug die Kegel axial aufeinander zubewegen zu können. Dadurch wird die Druckvorspannung in den Federkörper eingebracht.
Die Abdeckung kann beispielsweise durch Sollbruchstellen mit den in axialer Richtung jeweils angrenzenden Kegeln verbunden sein. Diese Sollbruchstellen können beispielsweise eine verringerte Materialstärke aufweisen. Eine Abtrennung der Abdeckung vom Kern nach dessen Beschichtung mit dem Haftmittel ist deshalb einfach möglich.

### Kurzbeschreibung der Zeichnung

Ein Ausführungsbeispiel des erfindungsgemäßen Lagers und des erfindungsgemäßen Verfahrens zu dessen Herstellung wird nachfolgend anhand der Fig. 1 bis 3 näher erläutert. Diese zeigen jeweils in schematischer Darstellung:
- Fig. 1: das Lager in seiner herstellungsbedingten Form im Anschluss an den fünften Verfahrensschritt, in dem das Lager aus dem Vulkanisationswerkzeug entformt wurde,
- Fig. 2: einen vergrößerten Ausschnitt aus Fig. 1, wobei der eine Kegel mit seiner Stirnseite den axialen Spalt begrenzt,
- Fig. 3: das erfindungsgemäße Lager im Anschluss an den sechsten Verfahrensschritt in seiner gebrauchsfertigen Form.

### Ausführung der Erfindung

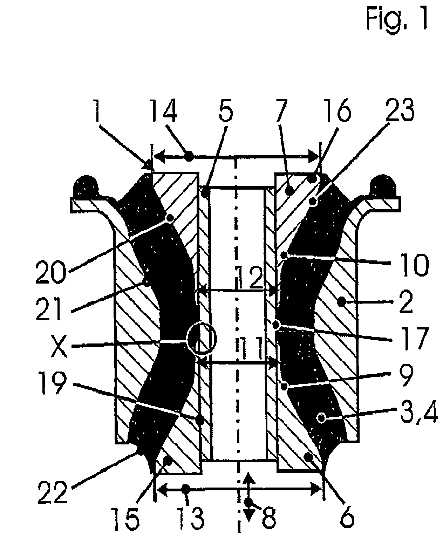

In den Fig. 1 bis 3 ist ein Ausführungsbeispiel des erfindungsgemäßen Lagers gezeigt.

Das Lager umfasst den Kern 1, der als Hybrid ausgebildet ist und aus der Stange 5 und den beiden Kegeln 6, 7 besteht. Die Stange 5 ist hohlzylinderförmig ausgebildet und besteht aus einem metallischen Werkstoff. Die Kegel 6, 7 bestehen demgegenüber aus einem polymeren Werkstoff, sind als Gleichteile ausgebildet und gegensinnig zueinander auf der Oberfläche 19 der Stange 5 angeordnet. Zwischen den Kegeln 6, 7 und der Stange 5 besteht ein Reibschluss, wobei die Kegel 6, 7 nach Überwindung eines Losbrechmoments in axialer Richtung 8 aufeinander zu beweglich sind, um eine Druckvorspannung in den Federkörper 4 einbringen zu können.

Um die beiden Kegel 6, 7 in axialer Richtung aufeinander zubewegen zu können, sind deren einander zugewandte Stirnseiten 9, 10 durch den axialen Spalt 17 voneinander beabstandet. Der Spalt 17 ist dabei derart bemessen, dass er ausreichend ist, um die Druckvorspannung in den Federkörper 4 zuverlässig einbringen zu können, dabei aber eine Faltenbildung im Elastomer in diesem Bereich gering zu halten.

Die Kegel 6, 7 werden im ersten Verfahrensschritt zur Herstellung des Lagers direkt an die Oberfläche 19 der Stange 5 angespritzt. Durch die Abkühlung des polymeren Werkstoffs, aus dem die Kegel 6, 7 bestehen, ergibt sich Schrumpf, so dass die Kegel 6, 7 anschließend, immer erst nach Überwindung eines Losbrechmoments, auf der Oberfläche 19 der Stange 5 hin und her verschiebbar sind.

Die dem Gehäuse 2 zugewandte Oberfläche 20 des Kerns 1 und die dem Kern 1 zugewandte Oberfläche 21 des Gehäuses 2 sind kongruent gestaltet, so dass der Einbauraum für den Federkörper 4 entlang der gesamten axialen Breite des Lagers eine im Wesentlichen übereinstimmende radiale Weite hat. Der Federkörper 4 ist dadurch mechanisch gleichmäßig belastet und weist gute Gebrauchseigenschaften während einer langen Gebrauchsdauer auf.
Die Außenumfangsfläche 20 des Kerns 1 ist konkav, die Innenumfangsfläche 21 des Gehäuses 2 konvex ausgebildet.

Um die Kerne 6, 7 zur Verkleinerung des axialen Spalts 17 in axialer Richtung aufeinander zubewegen zu können, ist es vorgesehen, dass der axiale Spalt 17 zwischen den Kegeln 6, 7 vom Federkörper 4 ungehaftet umschlossen ist. Um diese ungehaftete Zuordnung des Federkörpers 4 im Bereich des axialen Spalts 17 an der Stange 5 zu verhindern, ist die Abdeckung 25 vorgesehen, die den axialen Spalt 17 während des zweiten Verfahrensschritts vollständig überdeckt, so dass verhindert wird, dass dieser Bereich mit Haftmittel benetzt wird.

Das Verfahren zur Herstellung des Lagers erfolgt derart, dass in einem ersten Verfahrensschritt die Stange 5 und die Kegel 6, 7 miteinander zum Kern 1 vormontiert werden. Wie zuvor bereits beschrieben, kann das dadurch geschehen, dass der polymere Werkstoff, aus dem die Kegel 6, 7 bestehen, direkt an die Oberfläche 19 der Stange 5 angespritzt wird. Abhängig von den jeweiligen Gegebenheiten des Anwendungsfalles kann eine entsprechende Rauigkeit der Oberfläche 19 vorgesehen werden, wobei die Rauigkeit der Oberfläche 19 zum Beispiel dadurch erhöht werden kann, dass diese vor dem Anspritzen des polymeren Werkstoffs, aus dem die Kegel bestehen, gestrahlt wird.

In diesem vormontierten Zustand weisen die einander zugewandten Stirnseiten 9, 10 der Kegel 6, 7 einen axialen Abstand zueinander auf, der den axialen Spalt 17 begrenzt.

Werden die Kegel 6, 7 mittels Kunststoffspritzguss hergestellt, so kann auch die Abdeckung 25 im selben Verfahrensschritt hergestellt, also in einem Arbeitsgang, erzeugt werden. Die Abdeckung 25, die in den gezeigten Ausführungsbeispielen bereits abgetrennt und deshalb nicht zu sehen ist, überdeckt im Anschluss an den ersten Verfahrensschritt den axialen Spalt 17 zumindest im Wesentlichen vollständig.

Im zweiten Verfahrensschritt werden die außenumfangsseitigen Oberflächen 22, 23 der Kegel 6, 7 mit einem Haftmittel versehen, so dass diese anschließend für eine dauerhaltbare Verbindung mit dem Federkörper 4 vorbereitet sind. Ist eine Abdeckung 25 für den axialen Spalt 17 vorgesehen, ist das Aufbringen des Haftmittels besonders einfach, weil keine Rücksicht darauf genommen zu werden braucht, dass die Stange 5 im Bereich des axialen Spalts 17 frei von Haftmittel bleiben muss. Die mit Haftmittel versehene Abdeckung 25 wird im Anschluss an den zweiten Verfahrensschritt vom Kern 1 entfernt.
Ist eine Abdeckung 25 demgegenüber nicht vorgesehen, muss durch andere Maßnahmen sichergestellt werden, dass das Haftmittel die Oberfläche 19 der Stange 5 im Bereich des axialen Spalts 17 nicht oder kaum benetzt.

Im dritten Verfahrensschritt werden der vormontierte Kern 1, der im Längsschnitt betrachtet konkav ausgebildet ist, und das Gehäuse 2, das im Längsschnitt betrachtet entsprechend konvex ausgebildet ist, in die Kavität eines Vulkanisationswerkzeugs eingelegt, und im vierten Verfahrensschritt wird der gummielastische Werkstoff, aus dem der Federkörper 4 besteht, in die Kavität eingebracht und vulkanisiert. Im Anschluss an die Vulkanisation wird das vulkanisierte Lager im fünften Verfahrensschritt aus dem Vulkanisationswerkzeug entformt. Es hat dann die in Fig. 1 dargestellte Form.

In Fig. 1 ist das Lager dargestellt, wie es nach seiner Entformung aus dem Vulkanisationswerkzeug aussieht.

Der gummielastische Werkstoff des Federkörpers hat sich in den axialen Spalt 17 zwischen den beiden Kegeln 6, 7 bewegt, wobei der gummielastische Werkstoff der Oberfläche 19 der Stange 5 ungehaftet zugeordnet ist. Es ist zu erkennen, dass die beiden Kegel 6, 7 mit ihren einander axial abgewandten Stirnseiten 15, 16 in axialer Richtung über die stirnseitigen Begrenzungen der Stange 5 herausstehen. Der Federkörper 4 ist in diesem Ausführungsbeispiel noch nicht mit einer Druckvorspannung versehen.

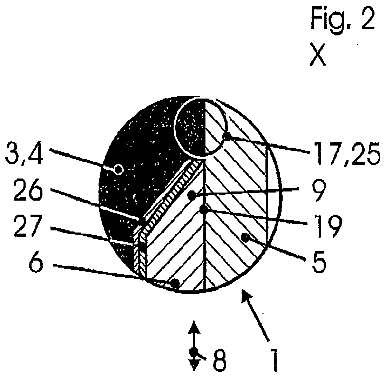

In Fig. 2 ist ein vergrößerter Ausschnitt aus dem Lager aus Fig. 1 gezeigt Der Kegel 6 umschließt die Oberfläche 19 der Stange 5 unmittelbar anliegend und ist seinerseits außenumfangsseitig vom Haftmittel 26 überdeckt. Im Bereich des axialen Spalts 17 sind die außenumfangsseitigen Oberflächen 22, 23 der Kegel 6, 7 von der Abdeckung 25 überdeckt, wobei die Abdeckung 25 ihrerseits vom Haftmittel 26 benetzt ist. Im axialen Spalt 17 berühren sich der gummielastische Werkstoff des Federkörpers 4 und die Oberfläche 19 der Stange 5 zwar anliegend, jedoch ungehaftet, so dass die Kegel 6, 7, wie nachfolgend erläutert wird, axial aufeinander zubewegt werden können, um eine Druckvorspannung in den Federkörper 4 einzubringen.

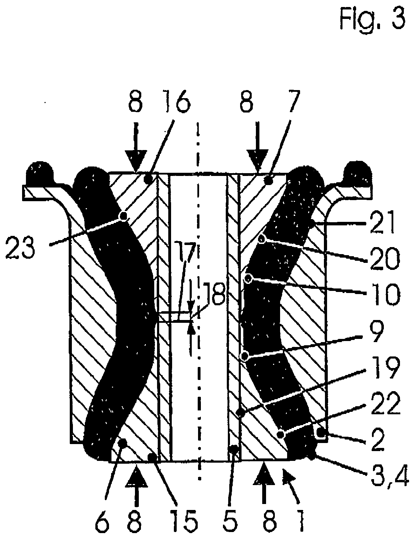

In Fig. 3 ist das Lager in seiner gebrauchsfertigen Form gezeigt. Im Vergleich zu dem in Fig. 1 gezeigten Zustand nach dem fünften Verfahrensschritt, schließen die einander axial abgewandten Stirnseiten 15, 16 der Kegel 6, 7 bündig mit den stirnseitigen Enden der Stange 5 ab.
Ausgehend vom Zustand des Lagers in Fig. 1 wurden die Kegel 6, 7 in axialer Richtung aufeinander zubewegt, wodurch der axiale Spalt 17 verkleinert wurde. Auch im Zustand des Lagers gemäß Fig. 3 ist ein kleiner axialer Spalt 17 noch vorhanden. Generell besteht jedoch auch die Möglichkeit, dass sich die einander zugewandten Stirnseiten 9, 10 der Kegel 6, 7 in diesem Zustand anliegend berühren. Sind die durch die axiale Kalibrierung des Federkörpers 4 auftretenden Kräfte entgegengesetzt zu der axialen Richtung 8 zur Einbringung der Druckvorspannung in den Federkörper 4 höher als das Losbrechmoment zwischen den Kegeln 6 und 7 auf der Stange 5, so kann die axiale Kalibrierung auch erst während des Verschraubens des Lagers im Fahrzeug aufgebracht werden.
Mit 27 ist der Haftmittel-Primer, mit 26 das Haftmittel-Cover gekennzeichnet.

Durch die Druckvorspannung im Federkörper 4 weist das Lager gleichbleibend gute Gebrauchseigenschaften während einer langen Gebrauchsdauer auf. Die axiale Kalibrierung des Lagers lässt sich einfach durchführen und ist für Hydrobuchsen oder Hilfsrahmenlager gleichermaßen gut geeignet

## Patentansprüche

1. Lager, umfassend einen Kern (1), der mit radialem Abstand von einem Gehäuse (2) aussenumfangsseitig umschlossen ist, wobei in dem durch den radialen Abstand gebildeten radialen Spalt (3) ein Federkörper (4) aus einem gummielastischen Werkstoff angeordnet ist, wobei der Kern (1) eine Stange (5) und zwei gegensinnig zueinander angeordnete Kegel (6, 7) umfasst, und wobei die Kegel (6, 7) die Stange (5) reibschlüssig anliegend, zur Einbringung einer Druckvorspannung in den Federkörper (4) jedoch in axialer Richtung (8) verschiebbar umschließen, **dadurch gekennzeichnet, dass** die Kegel (6,7) aus einem polymeren Werkstoff bestehen und an die Stange (5) angespritzt sind.

2. Lager nach Anspruch 1, **dadurch gekennzeichnet, dass** die Kegel (6, 7) einander zugewandte Stirnseiten (9, 10) aufweisen, die einander mit axialem Abstand benachbart zugeordnet sind und einen kleineren äußeren Durchmesser (11, 12; 13, 14) aufweisen, als die einander axial abgewandten Stirnseiten (15, 16).

3. Lager nach einem der Ansprüche 1 oder 2, **dadurch gekennzeichnet, dass** die Kegel (6, 7) durch ein Losbrechmoment auf der Stange (5) verschiebbar angeordnet sind, das zumindest 5 kN beträgt.

4. Lager nach einem der Ansprüche 1 bis 3, **dadurch gekennzeichnet, dass** der axial zwischen den Kegeln (6, 7) durch den axialen Abstand gebildete axiale Spalt (17) während der bestimmungsgemäßen Verwendung des Lagers eine axiale Breite (18) aufweist, die > Null ist.

5. Lager nach einem der Ansprüche 1 bis 4, **dadurch gekennzeichnet, dass** der axiale Spalt (17) vom Federkörper (4) ungehaftet umschlossen ist.

6. Lager nach einem der Ansprüche 1 bis 5, **dadurch gekennzeichnet, dass** die den Kegeln (6, 7) zugewandte Oberfläche (19) der Stange (5) in Längsrichtung eine Rauigkeit R_{z} aufweist, die 2 bis 80 beträgt.

7. Lager nach einem der Ansprüche 1 bis 6, **dadurch gekennzeichnet, dass** die Stange (5) aus einem metallischen Werkstoff besteht.

8. Lager nach einem der Ansprüche 1 bis 7, **dadurch gekennzeichnet, dass** der Kern (1) und das Gehäuse (2), im Längsschnitt des Lagers betrachtet, einander zugewandte Oberflächen (20, 21) aufweisen, die im Wesentlichen kongruent gestaltet sind.

9. Lager nach Anspruch 8, **dadurch gekennzeichnet, dass** die Außenumfangsfläche (20) des Kerns (1) konkav und die Innenumfangsfläche (21) des Gehäuses (2) konvex ausgebildet ist.

10. Lager nach einem der Ansprüche 1 bis 9, **dadurch gekennzeichnet, dass** es als Hydrobuchse oder Hilfsrahmenlager für ein Kraftfahrzeug ausgebildet ist.

11. Verfahren zur Herstellung eines Lagers nach einem der Ansprüche 1 bis 10, bei dem in einem ersten Verfahrensschritt die Stange (5) und die Kegel (6, 7) miteinander zum Kern (1) vormontierte werden, derart, dass die einander zugewandten Stirnseiten (9, 10) der Kegel (6, 7), zur Einbringung einer Druckvorspannung in den Federkörper (4) im sechsten Verfahrensschritt, durch den axialen Spalt (17) mit axialem Abstand benachbart zueinander angeordnet sind, dass in einem zweiten Verfahrensschritt im Wesentlichen nur die aussenumfangsseitigen Oberflächen (22, 23) der Kegel (6, 7), nicht die aussenumfangsseitige Oberfläche (24) der Stange (5) im Bereich des axialen Spalts (17), mit einem Haftmittel versehen werden, dass in einem dritten Verfahrensschritt der vormontierte Kern (1) und das Gehäuse (2) in die Kavität eines Vulkanisationswerkzeugs eingelegt werden, dass in einem vierten Verfahrensschritt der gummielastische Werkstoff des Federkörpers (4) in die Kavität eingebracht und vulkanisiert wird, dass in einem fünften Verfahrensschritt das Lager aus dem Vulkanisationswerkzeug entformt wird, dass in einem sechsten Verfahrensschritt die Kegel (6, 7) durch Überwindung des Losbrechmoments und Reduzierung der axialen Breite (18) des axialen Spalts (17) axial aufeinander zu bewegt werden, zur Einbringung der Druckvorspannung in den Federkörper (4).

12. Verfahren nach Anspruch 11, **dadurch gekennzeichnet, dass** der polymere Werkstoff der Kegel (6, 7) im ersten Verfahrensschritt direkt an die Stange (5) angespritzt wird.

13. Verfahren nach einem der Ansprüche 11 oder 12, **dadurch gekennzeichnet, dass** während des ersten Verfahrensschritts zusammen mit den Kegeln (6, 7) eine Abdeckung (25) für den axialen Spalt (17) mit angespritzt wird.

14. Verfahren nach Anspruch 13, **dadurch gekennzeichnet, dass** nach dem zweiten und vor dem dritten Verfahrensschritt die Abdeckung (25) vom Kern (1) abgetrennt wird.

## Claims

1. Mount, comprising a core (1) which is surrounded on the outer circumferential side with a radial distance by a housing (2), a spring body (4) made of a rubber-elastic material being arranged in the radial gap (3) formed by the radial distance, the core (1) having a rod (5) and two cones (6, 7) arranged in opposite directions to one another, and the cones (6, 7) enclosing the rod (5) in a frictionally engaged manner, but displaceably in the axial direction (8) for introducing a compressive prestress into the spring body (4), **characterised in that** the cones (6, 7) consist of a polymeric material and are injection-moulded onto the rod (5).

2. Mount according to claim 1, **characterised in that** the cones (6, 7) have mutually facing end faces (9, 10) which are adjacent to one another with axial spacing and have a smaller outer diameter (11, 12; 13, 14) than the axially opposite end faces (15, 16).

3. Mount according to any one of claims 1 or 2, **characterised in that** the cones (6, 7) are arranged on the rod (5) in a manner displaceable by a breakaway torque of at least 5 kN.

4. Mount according to any one of claims 1 to 3, **characterised in that** the axial gap (17) formed axially between the cones (6, 7) by the axial distance has an axial width (18) which is > zero during the intended use of the mount.

5. Mount according to any one of claims 1 to 4, **characterised in that** the axial gap (17) is enclosed by the spring body (4) without adhesion.

6. Mount according to any one of claims 1 to 5, **characterised in that** the surface (19) of the rod (5) facing the cones (6, 7) has a roughness R_{z} in the longitudinal direction which is 2 to 80.

7. Mount according to any one of claims 1 to 6, **characterised in that** the rod (5) consists of a metallic material.

8. Mount according to any one of claims 1 to 7, **characterised in that** the core (1) and the housing (2), viewed in the longitudinal section of the mount, have surfaces (20, 21) facing each other which are substantially congruent in shape.

9. Mount according to claim 8, **characterised in that** the outer circumferential surface (20) of the core (1) is concave and the inner circumferential surface (21) of the housing (2) is convex.

10. Mount according to any one of claims 1 to 9, **characterised in that** it is designed as a hydro bushing or subframe mount for a motor vehicle.

11. Method for producing a mount in accordance with any one of claims 1 to 10, in which, in a first method step, the rod (5) and the cones (6, 7) are pre-assembled with one another to form the core (1), in such a way that the end faces (9, 10) of the cones (6, 7) facing one another are used to introduce a compressive preload into the spring body (4) in the sixth method step, in a second method step, essentially only the surfaces (22, 23) of the outer circumference sides of the cones (6, 7) and not the surfaces (24) of the outer circumference sides of the rod (5) in the region of the axial gap (17), are provided with an adhesive, in a third method step the pre-assembled core (1) and the housing (2) are inserted into the cavity of a vulcanisation tool, in a fourth method step the rubber-elastic material of the spring body (4) is inserted into the cavity and vulcanised, in a fifth method step, the bearing is removed from the vulcanisation tool, in a sixth method step, the cones (6, 7) are moved axially towards one another by overcoming the breakaway torque and reducing the axial width (18) of the axial gap (17), in order to introduce the compressive prestress into the spring body (4).

12. Method according to claim 11, **characterised in that** the polymeric material of the cones (6, 7) is injection-moulded directly onto the rod (5) in the first method step.

13. Method according to either of claims 11 or 12, **characterised in that** during the first method step, a cover (25) for the axial gap (17) is also injection-moulded together with the cones (6, 7).

14. Method according to claim 13, **characterised in that** after the second and before the third method step the cover (25) is separated from the core (1).

## Revendications

1. Palier comprenant un noyau (1) qui est entouré sur sa circonférence extérieure par un boîtier (2) avec une distance radiale, dans lequel, dans la fente radiale (3), formée par la distance radiale, est agencé un corps formant ressort (4) présentant l'élasticité du caoutchouc, dans lequel le noyau (1) comprend une tige (5) et deux cônes (6, 7) agencés en sens opposés l'un par rapport à l'autre, et dans lequel les cônes (6, 7) entourent de manière déplaçable la tige (5) en lui étant appliqués en coopération de friction, mais avec possibilité de translation en direction axiale (8) pour exercer une précontrainte de compression dans le corps formant ressort (4), **caractérisé en ce que** les cônes (6, 7) sont constitués d'un matériau polymère et sont moulés par injection sur la tige (5).

2. Palier selon la revendication 1, **caractérisé en ce que** les cônes (6, 7) présentent des faces frontales (9, 10) tournées l'une vers l'autre qui sont agencées en voisinage l'une de l'autre avec une distance axiale et présentent un diamètre extérieur (11, 12 ; 13, 14) plus petit que les faces frontales (15, 16) détournées l'une de l'autre de manière axiale.

3. Palier selon l'une des revendications 1 ou 2, **caractérisé en ce que** les cônes (6, 7) sont agencés de manière déplaçable sur la tige (5) par un couple de décollement s'élevant au moins à 5 kN.

4. Palier selon l'une des revendications 1 à 3, **caractérisé en ce que** la fente axiale (17) formée axialement par la distance axiale entre les cônes (6, 7) présente, pendant l'utilisation du palier conforme à destination, une largeur axiale (18) qui est supérieure à zéro.

5. Palier selon l'une des revendications 1 à 4, **caractérisé en ce que** la fente axiale (17) est entourée de manière non adhésive par le corps formant ressort (4).

6. Palier selon l'une des revendications 1 à 5, **caractérisé en ce que** les surfaces (19) de la tige (5) tournées vers les cônes (6, 7) présentent dans le sens longitudinal une rugosité R_{z} de 2 à 80.

7. Palier selon l'une des revendications 1 à 6, **caractérisé en ce que** la tige (5) est constituée en un matériau métallique.

8. Palier selon l'une des revendications 1 à 7, **caractérisé en ce que** le noyau (1) et le boîtier (2), considérés dans la section longitudinale du palier, présentent des surfaces (20, 21) tournées l'une vers l'autre qui sont conçues sensiblement de manière congruente.

9. Palier selon la revendication 8, **caractérisé en ce que** la surface circonférentielle extérieure (20) du noyau (1) est formée de manière concave et **en ce que** la surface circonférentielle intérieure (21) du boîtier (2) est formée de manière convexe.

10. Palier selon l'une des revendications 1 à 9, **caractérisé en ce qu'**il est formé en tant que manchon hydraulique ou que palier de châssis auxiliaire pour un véhicule.

11. Procédé de fabrication d'un palier selon l'une des revendications 1 à 10, dans lequel, dans une première étape du procédé, la tige (5) et les cônes (6, 7) sont prémontés ensemble en formant le noyau (1), de sorte que les faces avant (9, 10) des cônes (6, 7) tournées l'une vers l'autre pour exercer une précontrainte de compression dans le corps formant ressort (4) dans une sixième étape du procédé, sont agencées à proximité l'une de l'autre avec une distance axiale résultant de la fente axiale (17), dans lequel, dans une deuxième étape du procédé, sensiblement uniquement les surfaces périphériques extérieures (22, 23) des cônes (6, 7), et non pas la surface périphérique extérieure (24) de la tige (5) dans la zone de la fente axiale (17), sont munies d'un agent adhésif, dans lequel, dans une troisième étape du procédé, le noyau prémonté (1) et le boîtier (2) sont placés dans la cavité d'un outil de vulcanisation, dans lequel, dans une quatrième étape du procédé, le matériau présentant l'élasticité du caoutchouc du corps formant ressort (4) est inséré dans la cavité et est vulcanisé, dans lequel, dans une cinquième étape du procédé, le palier est démoulé hors de l'outil de vulcanisation, dans lequel, dans une sixième étape du procédé, les cônes (6, 7) sont déplacés l'un vers l'autre de manière axiale en surmontant le couple de décollement et en réduisant la largeur axiale (18) de la fente axiale (17), pour exercer la précontrainte de compression dans le corps formant ressort (4).

12. Procédé selon la revendication 11, **caractérisé en ce que** le matériau polymère des cônes (6, 7), dans la première étape du procédé, est directement moulé par injection sur la tige (5).

13. Procédé selon l'une quelconque des revendications 11 ou 12, **caractérisé en ce que**, pendant la première étape du procédé, un couvercle (25) pour la fente axiale (17) est moulé par injection conjointement avec les cônes (6, 7).

14. Procédé selon la revendication 13, **caractérisé en ce que**, après la deuxième et avant la troisième étape du procédé, le couvercle (25) est séparé du noyau (1).
